(19) Europäisches Patentamt / European Patent Office / Office européen des brevets

(11) **EP 3 666 826 B1**

(12) **EUROPEAN PATENT SPECIFICATION**

(45) Date of publication and mention
of the grant of the patent:
**09.06.2021  Bulletin 2021/23**

(21) Application number: **18870964.6**

(22) Date of filing: **26.06.2018**

(51) Int Cl.:
**C08L 67/04** (2006.01)          **C08K 3/34** (2006.01)
**C08K 5/098** (2006.01)          **C08K 5/06** (2006.01)
**C08G 63/08** (2006.01)

(86) International application number:
**PCT/CN2018/092804**

(87) International publication number:
**WO 2019/080524 (02.05.2019 Gazette 2019/18)**

(54) **POLYLACTIC ACID COMPOSITE MATERIAL AND APPLICATION THEREOF**

POLYMILCHSÄUREVERBUNDSTOFF UND SEINE VERWENDUNG

MATÉRIAU COMPOSITE À BASE DE POLY(ACIDE LACTIQUE) ET APPLICATION ASSOCIÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.10.2017  CN 201711019796**

(43) Date of publication of application:
**17.06.2020  Bulletin 2020/25**

(73) Proprietor: **Kingfa Sci. & Tech. Co., Ltd.
Guangzhou, Guangdong 510663 (CN)**

(72) Inventors:
• **LU, Changli**
  **Guangzhou**
  **Guangdong 510663 (CN)**
• **YUAN, Zhimin**
  **Guangzhou**
  **Guangdong 510663 (CN)**
• **CAI, Tongmin**
  **Guangzhou**
  **Guangdong 510663 (CN)**
• **HUANG, Xianbo**
  **Guangzhou**
  **Guangdong 510663 (CN)**
• **ZENG, Xiangbin**
  **Guangzhou**
  **Guangdong 510663 (CN)**

• **JIAO, Jian**
  **Guangzhou**
  **Guangdong 510663 (CN)**
• **XIONG, Kai**
  **Guangzhou**
  **Guangdong 510663 (CN)**
• **YANG, Hui**
  **Guangzhou**
  **Guangdong 510663 (CN)**
• **MAI, Kaijin**
  **Guangzhou**
  **Guangdong 510663 (CN)**
• **DONG, Xueteng**
  **Guangzhou**
  **Guangdong 510663 (CN)**

(74) Representative: **Petraz, Gilberto Luigi et al
GLP S.r.l.
Viale Europa Unita, 171
33100 Udine (IT)**

(56) References cited:
WO-A1-2013/131649          CN-A- 101 679 733
CN-A- 102 174 201          CN-A- 102 838 858
CN-A- 103 788 357          CN-A- 107 868 416
US-A1- 2006 019 111          US-A1- 2007 092 745

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The present invention belongs to the technical field of polymer material modification, and in particular, relates to a polylactic acid composite and use thereof.

**BACKGROUND**

Polylactic acid resin is a polymer material obtained by chemical synthesis or biosynthesis using lactic acid as a monomer. Its raw materials are mainly corn, potato, etc., so its price is low. At the same time, as its raw materials are natural crops, carbon emissions are very low. From a safety point of view, polylactic acid is non-toxic and non-irritating, has excellent transparency and biodegradability, and is easily catabolized by a variety of microorganisms in nature or enzymes in plants and animals, eventually forming carbon dioxide and water, and thereby to a certain extent, it reduces white pollution and is an ideal green polymer material.

In addition to being biodegradable, products made of polylactic acid have good biocompatibility, glossiness, and transparency, and also have certain bacterial resistance and UV resistance, and therefore it is widely used in medical, spinning, tableware, toys and other fields.

At present, polylactic acid products are mostly disposable products or fast-moving consumer goods that do not have strict requirements on the service life. Because of the effects of microorganisms, light, radiation, air, and the physical environment in contact, polylactic acid products are easily aged and degraded during processing, storage and transportation, which affects the use of the final product.

Starting from the above problems, it was surprisingly found that according to the present invention, by controlling an end carboxyl content of the polylactic acid composite within a certain range, the composite can have suitable aging properties and excellent biodegradability.

WO 2013/131649 discloses a thermoformable composition containing at least one poly-L-lactide with less than 1 mol% of D-lactoyl units (PLLA) or at least one poly-L-lactide with from 1 mol% to 5 mol% of D-lactoyl units (PLA) and a nucleating combination at least one poly-D-lactide with less than 1 mol% of L-lactoyl-units (PDLA) as component a 1 ) or 0.5 to 5% by weight of PLLA/PDLA or PLA/PDLA stereocomplex crystallites, 0.1 to 25% by weight of an inorganic nucleating agent, preferably talc, and 0.1 to 30 % by weight of at least an inorganic filler with lamellar structure, preferably a lamellar clay mineral.

US 2007/092745 discloses a composite product with a heat distortion temperature of at least 120°C, comprising semicrystalline polylactic acid (PLA), starch and a compatibilizer.

None of these documents discloses to control the end carboxyl content of the polylactic acid composite within a certain range.

**SUMMARY OF THE INVENTION**

An objective of the present invention is to provide a polylactic acid composite, and the polylactic acid composite has suitable aging properties and excellent biodegradability.

The present invention is achieved by the following technical solution:

a polylactic acid composite, including the following components in parts by weight:

> i) 50 to 85 parts by weight of polylactic acid;
> ii) 8 to 35 parts by weight of an inorganic filler; and
> iii) 0 to 8 parts by weight of a plasticizer;

wherein the polylactic acid composite has an end carboxyl content of 12 to 51 molKOH/t.

In particular, a measurement method of the end carboxyl content is as follows: using a mixed liquor of o-cresol and trichloromethane with a mass ratio of 7:3 as a solvent, measuring an end carboxyl value with a Metrohm Titrino series automatic potentiometric titrator, carrying out a measuring method using FZ/T 50012-2006 *"Determination for end carboxyl content in polyester-titration analysis method"*, rounding off a one decimal place after the decimal point of an end carboxyl value according to a rounding method.

There are many factors that affect the end carboxyl content of polylactic acid composite, for example, different microstructure of the raw material polylactic acid. As known to those skilled in the art, polylactic acid can be obtained by direct polycondensation of lactic acid or by ring-opening polymerization of lactide. During the synthesis process, if polylactic acid is not end-capped with an end-capping reagent, the synthesized polylactic acid is a polymer containing a certain end carboxyl content. In addition, during the synthesis of polylactic acid, by controlling the amount of catalyst added and adjusting the degree of vacuum and the reaction time, it will also affect the end carboxyl content of the synthesized polylactic acid, thereby making the microstructure of polylactic acid different. Due to the high temperature melting during the modification of the polylactic acid composite, high temperature melting itself is the balance for further reaction and degradation of polymer end groups, and with the addition of various additives, etc., it will have a certain impact on the end carboxyl content of the finally prepared polylactic acid composite, so that the product will show different aging properties and biodegradability in the macro.

The present invention found through research that controlling the end carboxyl content of the polylactic acid composite within a range of 12 to 51 molKOH/t can make the composite have suitable aging properties and excellent biodegradability. The higher the end carboxyl content of the polylactic acid composite, the more likely it is to degrade after being discarded, which is good for reducing environmental pollution. However, the excessive end carboxyl content in the polylactic acid composite may cause aging degradation of polylactic acid products during processing, storage, and transportation, which affects the use of final products. If the end carboxyl content of polylactic acid composite is too low, it means that more catalysts, lower vacuum, longer reaction time are required during the synthesis process, while more sophisticated equipment and more capital investment are required, and it will also generate higher energy consumption. Therefore, preferably, an end carboxyl content of the polylactic acid composite is 18 to 41 molKOH/t; preferably 28 to 36 molKOH/t.

The polylactic acid composite, under a condition of 60°C and 60% humidity, with a test time of 30 days, has a ratio of a mass melt index $MFI_{t=30}$ to an initial mass melt index $MFI_{t=0}$ satisfies the following relationship:

$$3.5 < \eta = MFI_{t=30} / MFI_{t=0} < 5.1;$$

preferably,

$$3.9 < \eta = MFI_{t=30} / MFI_{t=0} < 4.7;$$

more preferably,

$$4.2 < \eta = MFI_{t=30} / MFI_{t=0} < 4.5;$$

a mass melt index MFI of the polylactic acid composite is tested according to standard ASTM D1238, and test conditions are 190°C, 2.16kg, with a unit of g/10min.

According to ISO 16929 (2013), the polylactic acid composite has a biodegradation rate greater than 90% after 12 weeks in a case where a thickness is 2.5 mm or less.

The inorganic filler is selected from one or a mixture of more of talcum powder, montmorillonite, kaolin, chalk, calcium carbonate, gypsum, calcium chloride, iron oxide, dolomite, silicon dioxide, wollastonite, titanium dioxide, silicate, and mica, preferably one or a mixture of more of talcum powder, calcium carbonate, and silicon dioxide. The addition of the inorganic filler can not only improve the mechanical properties of the material, but the inorganic filler can also act as a nucleating agent, increase a crystallization rate of a polyester composition, and improve processing conditions of the polylactic acid composite.

The plasticizer which is liquid at room temperature is selected from one or a mixture of more of glycerol, polyglycerol, ethylene glycol, polyethylene glycol-400, polyethylene glycol-600, polyethylene glycol-800, epoxy soybean oil, citrate, acetyl citrate, triacetyl glyceride, and dioctyl adipate.

Plasticizers that are liquid at room temperature are mostly low-molecular-weight compounds. The addition of a low-molecular-weight plasticizer to polylactic acid can help promote the movement of polylactic acid segments, thereby improving tenacity of the polylactic acid composite to a certain extent. At the same time, the low-molecular-weight plasticizer can more effectively promote the crystallization of the polylactic acid and increase the heat-resistant temperature of the polylactic acid to a certain extent.

The polylactic acid composite further includes 0 to 10 parts by weight of a flexibilizer, and the flexibilizer is preferably an aliphatic polyester or an aliphatic-aromatic copolyester.

According to the actual performance requirements, the polylactic acid composite according to the present invention, in parts by weight, further includes 0 to 4 parts by weight of the following other additive: a release agent, a surfactant, a wax, an antistatic agent, a dye, or other plastic additive.

The release agent is silicone masterbatch, montan wax, erucylamide, or oleamide.

The surfactant is one or a mixture of more of polysorbate, palmitate, and laurate.

The wax is one or a mixture of more of erucylamide, stearamide, behenamide, beeswax, and beeswax ester.

The antistatic agent is a permanent antistatic agent, and specific examples include one or a mixture of more of PELESTAT-230, PELESTAT-6500, and SUNNICO ASA-2500.

The dye is one or a mixture of more of carbon black, black color base, titanium dioxide, zinc sulfide, phthalocyanine blue, and fluorescent orange.

Said other plastic additive may be nucleating agent, antifogging agent, lubricant (such as calcium stearate), primary antioxidant, auxiliary antioxidant, etc.

The present invention further provides use of the above-described polylactic acid composite in injection-grade, blister-grade, and extrusion-grade products such as tableware, toys, and stationery.

Compared with the prior art, the present invention has the following beneficial effects:

The present invention unexpectedly discovered through research that, by controlling an end carboxyl content of the polylactic acid composite within a range of 12 to 51 molKOH/t, the polylactic acid composite, under a condition of 60°C and 60% humidity, with a test time of 30 days, has a ratio of a mass melt index $MFI_{t=30}$ to an initial mass melt index $MFI_{t=0}$ satisfying $3.5 < \eta = MFI_{t=30}/ MFI_{t=0} < 5.1$, which indicates that under the test conditions, the product has slow aging degradation, and the polylactic acid composite has a biodegradation rate greater than 90% after 12 weeks in the case where a thickness is 2.5 mm or less, and has suitable aging properties and excellent biodegradability.

## DETAILED DESCRIPTION OF THE PREFERRED EMBODIMENT

The present invention is further described below by specific implementations, and the following embodiments are preferable implementations of the present invention, but the implementation of the present invention is not limited by the following embodiments.

The raw materials used in the present invention are all commercially available.

## Performance test method:

biodegradation rate: according to ISO 16929 (2013), a thickness was 2.5mm or less, and the biodegradation rate of the polylactic acid composite after 12 weeks was tested.

$\eta$: under a condition of 60°C and 60% humidity, with a test time of 30 days, a ratio of a mass melt index $MFI_{t=30}$ to an initial mass melt index $MFI_{t=0}$, $\eta = MFI_{t=30}/ MFI_{t=0}$, the lower the $\eta$ value, the slower the aging degradation of the product, the better the aging resistance.

Mass melt index MFI: was tested according to standard ASTM D1238, and test conditions were 190°C, 2.16kg, with a unit of g/10min.

A measurement method of the end carboxyl content was as follows: a mixed liquor of o-cresol and trichloromethane with a mass ratio of 7:3 was used as a solvent, an end carboxyl value was measured with a Metrohm Titrino series automatic potentiometric titrator, a measuring method was carried out using FZ/T 50012-2006 *"Determination for end carboxyl content in polyester-titration analysis method"*, a one decimal place after the decimal point of an end carboxyl value was rounded off according to a rounding method.

## Synthesis of polylactic acid:

## Embodiment A1

20mol of commercially available L-lactide was taken as a raw material, toluene was used as an organic solution, 0.035mol of stannous octoate was added as a catalyst, and they were added into a 20L stainless steel reactor, the reactor was depressurized to high vacuum of 0.080MPa, and slowly heated to 145°C. Stirring was conducted for 1 hour to completely dissolve lactide. The toluene steam generated by heating was extracted, the vacuum was maintained at 0.080MPa, and the reaction was stopped after the reaction was carried out at a constant temperature of 145°C for 18 hours. After the pressure in the reactor became normal pressure, ethyl acetate was added to dissolve the solid in the reactor, and then was pour into a container for air dry. After the ethyl acetate solvent was completely evaporated, it was placed in a vacuum dryer for use.

End carboxyl content: 14 mol KOH/t.
Unit power consumption: 85 kw·h/Kg.

**Embodiment A2**

20mol of commercially available L-lactide was taken as a raw material, toluene was used as an organic solution, 0.035mol of stannous octoate was added as a catalyst, and they were added into a 20L stainless steel reactor, the reactor was depressurized to high vacuum of 0.080MPa, and slowly heated to 145°C. Stirring was conducted for 1 hour to completely dissolve lactide. The toluene steam generated by heating was extracted, the vacuum was maintained at 0.080MPa, and the reaction was stopped after the reaction was carried out at a constant temperature of 145°C for 13 hours. After the pressure in the reactor became normal pressure, ethyl acetate was added to dissolve the solid in the reactor, and then was pour into a container for air dry. After the ethyl acetate solvent was completely evaporated, it was placed in a vacuum dryer for use.

End carboxyl content: 19 mol KOH/t.
Unit power consumption: 63 kw·h/Kg.

**Embodiment A3**

20mol of commercially available L-lactide was taken as a raw material, toluene was used as an organic solution, 0.027mol of stannous octoate was added as a catalyst, and they were added into a 20L stainless steel reactor, the reactor was depressurized to high vacuum of 0.101MPa, and slowly heated to 135°C. Stirring was conducted for 1 hour to completely dissolve lactide. The toluene steam generated by heating was extracted, the vacuum was maintained at 0.101MPa, and the reaction was stopped after the reaction was carried out at a constant temperature of 135°C for 12 hours. After the pressure in the reactor became normal pressure, ethyl acetate was added to dissolve the solid in the reactor, and then was pour into a container for air dry. After the ethyl acetate solvent was completely evaporated, it was placed in a vacuum dryer for use.

End carboxyl content: 25 mol KOH/t.
Unit power consumption: 60 kw·h/Kg.

**Embodiment A4**

20mol of commercially available L-lactide was taken as a raw material, toluene was used as an organic solution, 0.027mol of stannous octoate was added as a catalyst, and they were added into a 20L stainless steel reactor, the reactor was depressurized to high vacuum of 0.101MPa, and slowly heated to 135°C. Stirring was conducted for 1 hour to completely dissolve lactide. The toluene steam generated by heating was extracted, the vacuum was maintained at 0.101MPa, and the reaction was stopped after the reaction was carried out at a constant temperature of 135°C for 9 hours. After the pressure in the reactor became normal pressure, ethyl acetate was added to dissolve the solid in the reactor, and then was pour into a container for air dry. After the ethyl acetate solvent was completely evaporated, it was placed in a vacuum dryer for use.

End carboxyl content: 31 mol KOH/t.
Unit power consumption: 52 kw·h/Kg.

**Embodiment A5**

20mol of commercially available L-lactide was taken as a raw material, toluene was used as an organic solution, 0.022mol of stannous octoate was added as a catalyst, and they were added into a 20L stainless steel reactor, the reactor was depressurized to high vacuum of 0.150MPa, and slowly heated to 130°C. Stirring was conducted for 1 hour to completely dissolve lactide. The toluene steam generated by heating was extracted, the vacuum was maintained at 0.150MPa, and the reaction was stopped after the reaction was carried out at a constant temperature of 130°C for 9 hours. After the pressure in the reactor became normal pressure, ethyl acetate was added to dissolve the solid in the reactor, and then was pour into a container for air dry. After the ethyl acetate solvent was completely evaporated, it was placed in a vacuum dryer for use.

End carboxyl content: 36 mol KOH/t.
Unit power consumption: 50 kw·h/Kg.

**Comparative example B1:**

20mol of commercially available L-lactide was taken as a raw material, toluene was used as an organic solution, 0.022mol of stannous octoate was added as a catalyst, and they were added into a 20L stainless steel reactor, the reactor was depressurized to high vacuum of 0.150MPa, and slowly heated to 130°C. Stirring was conducted for 1 hour to completely dissolve lactide. The toluene steam generated by heating was extracted, the vacuum was maintained at 0.150MPa, and the reaction was stopped after the reaction was carried out at a constant temperature of 130°C for 6 hours. After the pressure in the reactor became normal pressure, ethyl acetate was added to dissolve the solid in the reactor, and then was pour into a container for air dry. After the ethyl acetate solvent was completely evaporated, it was placed in a vacuum dryer for use.

End carboxyl content: 48 mol KOH/t.
Unit power consumption: 36 kw·h/Kg.

**Comparative example B2:**

20mol of commercially available L-lactide was taken as a raw material, toluene was used as an organic solution, 0.035mol of stannous octoate was added as a catalyst, and they were added into a 20L stainless steel reactor, the reactor was depressurized to high vacuum of 0.065MPa, and slowly heated to 145°C. Stirring was conducted for 1 hour to completely dissolve lactide. The toluene steam generated by heating was extracted, the vacuum was maintained at 0.065MPa, and the reaction was stopped after the reaction was carried out at a constant temperature of 145°C for 21 hours. After the pressure in the reactor became normal pressure, ethyl acetate was added to dissolve the solid in the reactor, and then was pour into a container for air dry. After the ethyl acetate solvent was completely evaporated, it was placed in a vacuum dryer for use.

End carboxyl content: 9 mol KOH/t.
Unit power consumption: 92 kw·h/Kg.

After polylactic acid, organic filler, plasticizer and calcium stearate were mixed evenly according to the formulas in Table 1, the mixture was put into a twin-screw extruder to extrude and pellet at 150°C to 220°C to obtain a polylactic acid composite. The performance test data is shown in Table 1.

Table 1 Performance test results of Embodiments 1-10 and Comparative examples 1-2 (parts by weight)

|  | Compa. ex. 1 | Compa. ex. 2 | Embodiment1 | Embodiment2 | Embodiment 3 | Embodiment 4 | Embodiment 5 | Embodiment 6 | Embodiment 7 | Embodiment 8 | Embodiment 9 | Embodiment 10 |
|---|---|---|---|---|---|---|---|---|---|---|---|---|
| A1 |  |  |  |  |  | 65 |  |  |  |  |  |  |
| A2 |  |  |  | 65 |  |  |  |  |  |  |  |  |
| A3 |  |  | 65 |  |  |  |  | 70 | 69 | 66 | 85 |  |
| A4 |  |  |  |  | 65 |  |  |  |  |  |  |  |
| A5 |  |  |  |  |  |  | 65 |  |  |  |  | 55 |
| B1 |  | 65 |  |  |  |  |  |  |  |  |  |  |
| B2 | 65 |  |  |  |  |  |  |  |  |  |  |  |
| talcum powder | 28 | 28 | 28 | 28 | 28 | 28 | 28 | 28 | 28 | 20 | 9 | 35 |
| PEG 400 | 5 | 5 | 5 | 5 | 5 | 5 | 5 |  | 1 | 2 | 4 | 8 |
| calcium stearate | 2 | 2 | 2 | 2 | 2 | 2 | 2 | 2 | 2 | 2 | 2 | 2 |

(continued)

|  | Co mpa . ex. 1 | Co mpa . ex. 2 | Emb odi men t1 | Emb odi men t2 | Embo dime nt 3 | Embo dime nt 4 | Embo dime nt 5 | Em bod ime nt 6 | Em bod ime nt 7 | Em bod ime nt 8 | Em bod ime nt 9 | Emb odim ent 10 |
|---|---|---|---|---|---|---|---|---|---|---|---|---|
| End carboxyl content of polylactic acid composite mol KOH/t | 10 | 55 | 30 | 25 | 40 | 17 | 48 | 37 | 30 | 33 | 43 | 45 |
| $\eta$ | 3.1 | 5.8 | 4.2 | 3.9 | 4.6 | 3.5 | 5.0 | 4.6 | 4.4 | 4.5 | 4.8 | 5.1 |
| biodegra dation rate % | 87. 8 | 97.5 | 92.3 | 91.8 | 94.2 | 90.2 | 96.8 | 94. 0 | 94. 1 | 94.5 | 95.3 | 97.8 |

It can be seen from the results in Table 1 that, in the embodiments of the present invention, by controlling the end carboxyl content of the polylactic acid composite within a range of 12 to 51 molKOH/t, the melt index of the composite can be brought into a reasonable range under test conditions, and in the case where a thickness is 2.5 mm or less, the polylactic acid composite has a biodegradation rate greater than 90% after 12 weeks, and has suitable aging properties and excellent biodegradability. In comparative example 1, the end carboxyl content of the polylactic acid composite is lower than 12 molKOH/t, and the biodegradation rate of the composite is lower than 90%. In comparative example 2, the end carboxyl content of the polylactic acid composite is higher than 51 mol KOH/t, although the composite has a higher biodegradation rate, its melt index rises faster during the test cycle and has poor aging resistance.

**Claims**

1.   A polylactic acid composite, **characterized in that**, comprises the following components in parts by weight:

      i) 50 to 85 parts by weight of polylactic acid;
      ii) 8 to 35 parts by weight of an inorganic filler; and
      iii) 0 to 8 parts by weight of a plasticizer;

wherein the polylactic acid composite has an end carboxyl content of 12 to 51 molKOH/t; and wherein a measurement method of the end carboxyl content is as follows: using a mixed liquor of o-cresol and trichloromethane with a mass ratio of 7:3 as a solvent, measuring an end carboxyl value with a Metrohm Titrino series automatic potentiometric titrator, carrying out a measuring method using FZ/T 50012-2006 *"Determination for end carboxyl content in polyester-titration analysis method",* rounding off a one decimal place after the decimal point of an end carboxyl value according to a rounding method.

2.   The polylactic acid composite according to claim 1, wherein the end carboxyl content of the polylactic acid composite is 18 to 41 molKOH/t, preferably 28 to 36 molKOH/t.

3.   The polylactic acid composite according to claim 1, wherein under a condition of 60°C and 60% humidity, with a test time of 30 days, a ratio of a mass melt index $MFI_{t=30}$ of the polylactic acid composite to an initial mass melt index $MFI_{t=0}$ satisfies the following relationship:

$$3.5 < \eta = MFI_{t=30} / MFI_{t=0} < 5.1;$$

preferably,

$$3.9<\eta= MFI_{t=30}/ MFI_{t=0}<4.7;$$

more preferably,

$$4.2<\eta= MFI_{t=30}/ MFI_{t=0}<4.5;$$

a mass melt index MFI of the polylactic acid composite is tested according to standard ASTM D1238, and test conditions are 190°C, 2.16kg, with a unit of g/10min.

4. The polylactic acid composite according to claim 1, wherein according to ISO 16929 (2013), the polylactic acid composite has a biodegradation rate greater than 90% after 12 weeks when a thickness is 2.5 mm or less.

5. The polylactic acid composite according to claim 1, wherein the inorganic filler is selected from one or a mixture of more of talcum powder, montmorillonite, kaolin, chalk, calcium carbonate, gypsum, calcium chloride, iron oxide, dolomite, silicon dioxide, wollastonite, titanium dioxide, silicate, and mica, preferably one or a mixture of more of talcum powder, calcium carbonate, and silicon dioxide.

6. The polylactic acid composite according to claim 1, wherein the plasticizer which is liquid at room temperature is selected from one or a mixture of more of glycerol, polyglycerol, ethylene glycol, polyethylene glycol-400, polyethylene glycol-600, polyethylene glycol-800, epoxy soybean oil, citrate, acetyl citrate, triacetyl glyceride, and dioctyl adipate.

7. The polylactic acid composite according to claim 1, wherein in parts by weight, the polylactic acid composite further comprises 0 to 10 parts by weight of a flexibilizer, and the flexibilizer is an aliphatic polyester or an aliphatic-aromatic copolyester.

8. The polylactic acid composite according to claim 1, wherein in parts by weight, the polylactic acid composite further comprises 0 to 4 parts by weight of the following other additive: a release agent, a surfactant, a wax, an antistatic agent, a dye, or other plastic additive.

9. Use of the polylactic acid composite according to any of claims 1 to 8 in injection-grade, blister-grade, and extrusion-grade products including tableware, toys, and stationery.

**Patentansprüche**

1. Polymilchsäureverbundstoff, **dadurch gekennzeichnet, dass** er die folgenden Bestandteile in Gewichtsanteilen umfasst:

   i) 50 bis 85 Gewichtsanteile von Polymilchsäure;
   ii) 8 bis 35 Gewichtsanteile eines anorganischen Füllstoffs; und
   iii) 0 bis 8 Gewichtsanteile eines Weichmachers;

   worin der Polymilchsäureverbundstoff einen Ende-Carboxyl-Gehalt von 12 bis 51 molKOH/t; und
   worin ein Messverfahren des Ende-Carboxyl-Gehalts wie folgt ist: unter Verwendung eines Flüssigkeitsgemisches aus o-Kresol und Trichlormethan mit einem Massenverhältnis von 7:3 als Lösungsmittel, Messen eines Ende-Carboxyl-Wertes mit einem automatischen potentiometrischen Titrator der Metrohm-Titrino-Serie, Durchführen eines Messverfahrens unter Verwendung von FZ/T 50012-2006 *"Determination for end carboxyl content in polyester-titration analysis method",* Abrunden einer Dezimalstelle nach dem Dezimalpunkt eines Ende-Carboxyl-Wertes gemäß einem Abrundungsverfahren.

2. Polymilchsäureverbundstoff nach Anspruch 1, worin der Ende-Carboxyl-Gehalt des Polymilchsäureverbundstoffs 18 bis 41 molKOH/t, bevorzugt 28 bis 36 molKOH/t beträgt.

3. Polymilchsäureverbundstoff nach Anspruch 1, worin unter einer Bedingung von 60°C und 60% Feuchtigkeit, mit einer Testzeit von 30 Tagen, ein Verhältnis von einem Massenschmelzindex $MFI_{t=30}$ des Polymilchsäureverbundstoffs zu einem anfänglichen Massenschmelzindex $MFI_{t=0}$ die folgende Beziehung erfüllt:

$3,5 < \eta = MFI_{t=30} / MFI_{t=0} < 5,1$ ;
bevorzugt, $3,9 < \eta = MFI_{t=30} / MFI_{t=0} < 4,7$ ;
noch bevorzugter, $4,2 < \eta = MFI_{t=30} / MFI_{t=0} < 4,5$ ;
ein Massenschmelzindex MFI des Polymilchsäureverbundstoffs gemäß dem Standard ASTM D1238 geprüft wird, und die Prüfbedingungen 190°C, 2,16 kg, mit einer Einheit von g/10 min sind.

4. Polymilchsäureverbundstoff nach Anspruch 1, worin gemäß ISO 16929 (2013) der Polymilchsäureverbundstoff eine Abbaurate größer als 90% nach 12 Wochen hat, wenn eine Dicke 2,5 mm oder weniger beträgt.

5. Polymilchsäureverbundstoff nach Anspruch 1, worin der anorganische Füllstoff aus einem oder aus einer Mischung aus mehreren von Talkum, Montmorillonit, Kaolin, Kreide, Kalziumkarbonat, Gips, Kalziumchlorid, Eisenoxid, Dolomit, Siliciumdioxid, Wollastonit, Titandioxid, Silikat und Mika, vorzugsweise einem oder einer Mischung aus mehreren von Talkum, Kalziumkarbonat und Siliciumdioxid ausgewählt ist.

6. Polymilchsäureverbundstoff nach Anspruch 1, worin der Weichmacher, der bei Raumtemperatur flüssig ist, aus einem oder aus einer Mischung aus mehreren von Glycerin, Polyglycerin, Ethylenglykol, Polyethylenglykol-400, Polyethylenglykol-600, Polyethylenglykol-800, Epoxid-Sojaöl, Citrat, Acetylcitrat, Triacetyl-Glycerid und Dioctyladipat ausgewählt ist.

7. Polymilchsäureverbundstoff nach Anspruch 1, worin in Gewichtsanteilen der Polymilchsäureverbundstoff ferner 0 bis 10 Gewichtsanteile eines Flexibilisators umfasst, und der Flexibilisator ein aliphatischer Polyester oder ein aliphatischaromatischer Copolyester ist.

8. Polymilchsäureverbundstoff nach Anspruch 1, worin in Gewichtsanteilen der Polymilchsäureverbundstoff ferner 0 bis 4 Gewichtsanteile des folgenden anderen Zusatzstoffes umfasst: ein Trennmittel, ein Tensid, ein Wachs, ein antistatisches Mittel, einen Farbstoff oder einen anderen plastischen Zusatzstoff.

9. Verwendung des Polymilchsäureverbundstoffs nach einem der Ansprüche 1 bis 8 in einspritzbaren, blisterfähigen und extrusionsfähigen Produkten, einschließlich Tafelgeschirrs, Spielsachen und Papier- und Schreibwaren.

**Revendications**

1. Composite d'acide polylactique, **caractérisé en ce qu'**il comprend les composants suivants en parties en poids :

   i) 50 à 85 parties en poids d'acide polylactique ;
   ii) 8 à 35 parties en poids d'une charge inorganique ; et
   iii) 0 à 8 parties en poids d'un plastifiant ;

   dans lequel le composite d'acide polylactique a une teneur en carboxyle terminal de 12 à 51 moles de KOH/t ; et dans lequel un procédé de mesure de la teneur en carboxyle terminal est le suivant : utilisation d'une liqueur mixte de o-crésol et de trichlorométhane avec un rapport massique de 7:3 en tant que solvant, mesure d'une valeur de carboxyle terminal avec un titrateur potentiométrique automatique de la série Metrohm Titrino, réalisation d'un procédé de mesure utilisant FZ/T 50012-2006 *« Determination for end carboxyl content in polyester-titration analysis method* (Détermination de la teneur en carboxyle terminal dans un procédé d'analyse de titrage de polyester) »*, arrondissement à une décimale près après la virgule d'une valeur de carboxyle terminal selon un procédé d'arrondissement.

2. Composite d'acide polylactique selon la revendication 1, dans lequel la teneur en carboxyle terminal du composite d'acide polylactique est de 18 à 41 moles de KOH/t, de préférence de 28 à 36 moles de KOH/t.

3. Composite d'acide polylactique selon la revendication 1, dans lequel, dans une condition de 60°C et 60 % d'humidité, avec un temps de test de 30 jours, un rapport d'un indice de fluidité massique $MFI_{t=30}$ du composite d'acide polylactique à un indice de fluidité massique initial $MFI_{t=0}$ satisfait la relation suivante :

$$3{,}5 < \eta = MFI_{t=30} / MFI_{t=0} < 5{,}1 \; ;$$

de préférence,

$$3{,}9 < \eta = MFI_{t=30} / MFI_{t=0} < 4{,}7 \; ;$$

de manière plus préférée,

$$4{,}2 < \eta = MFI_{t=30} / MFI_{t=0} < 4{,}5 \; ;$$

un indice de fluidité massique MFI du composite d'acide polylactique est testé selon la norme ASTM D1238, et les conditions de test sont de 190°C, 2,16 kg, avec une unité de g/10 min.

4. Composite d'acide polylactique selon la revendication 1, dans lequel selon la norme ISO 16929 (2013), le composite d'acide polylactique a un taux de biodégradation supérieur à 90 % après 12 semaines lorsqu'une épaisseur est de 2,5 mm ou moins.

5. Composite d'acide polylactique selon la revendication 1, dans lequel la charge inorganique est choisie parmi un ou un mélange de plusieurs parmi la poudre de talc, la montmorillonite, le kaolin, la chaux, le carbonate de calcium, le gypse, le chlorure de calcium, l'oxyde de fer, la dolomite, le dioxyde de silicium, la wollastonite, le dioxyde de titane, le silicate et le mica, de préférence un ou un mélange de plusieurs parmi la poudre de talc, le carbonate de calcium et le dioxyde de silicium.

6. Composite d'acide polylactique selon la revendication 1, dans lequel le plastifiant qui est liquide à température ambiante est choisi parmi un ou un mélange de plusieurs parmi le glycérol, le polyglycérol, l'éthylène glycol, le polyéthylène glycol-400, le polyéthylène glycol-600, le polyéthylène glycol-800, l'huile de soja époxy, le citrate, le citrate d'acétyle, le glycéride de triacétyle et l'adipate de dioctyle.

7. Composite d'acide polylactique selon la revendication 1, dans lequel, en parties en poids, le composite d'acide polylactique comprend en outre 0 à 10 parties en poids d'un plastifiant, et le plastifiant est un polyester aliphatique ou un copolyester aliphatique-aromatique.

8. Composite d'acide polylactique selon la revendication 1, dans lequel, en parties en poids, le composite d'acide polylactique comprend en outre 0 à 4 parties en poids de l'autre additif suivant : un agent de libération, un tensioactif, une cire, un agent antistatique, un colorant ou un autre additif plastique.

9. Utilisation du composite d'acide polylactique selon l'une quelconque des revendications 1 à 8 dans des produits de qualité injection, de qualité coque et de qualité extrusion, y compris de la vaisselle, des jouets et de la papeterie.

**EP 3 666 826 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013131649 A
- US 2007092745 A